Europäisches Patentamt

European Patent Office

Office européen des brevets

(11) Veröffentlichungsnummer: **0 475 146 A1**

# EUROPÄISCHE PATENTANMELDUNG

(21) Anmeldenummer: **91114059.8**

(22) Anmeldetag: **22.08.91**

(51) Int. Cl.⁵: **B60Q 3/00**

(30) Priorität: **28.08.90 DE 9012325 U**

(43) Veröffentlichungstag der Anmeldung:
**18.03.92 Patentblatt 92/12**

(84) Benannte Vertragsstaaten:
**DE ES FR GB IT**

(71) Anmelder: **SCHOELLER & CO.**
**Elektrotechnische Fabrik GmbH & Co.**
**Mörfelder Landstrasse 115-119 Postfach 70**
**11 40**
**W-6000 Frankturt am Main(DE)**

(72) Erfinder: **Hofmann, Dieter**
**Cranachstrasse 28**
**W-8750 Aschaffenburg(DE)**
Erfinder: **Gräser, Norbert**
**An der Herrenwiese 57**
**W-6000 Frankturt 71(DE)**

(74) Vertreter: **Rupprecht, Klaus, Dipl.-Ing. et al**
**c/o ABB Patent GmbH, Patentabteilung,**
**Postfach 10 03 51**
**W-6800 Mannheim 1(DE)**

(54) **Beleuchtungsvorrichtung für das Zündschloss eines Kraftfahrzeugs.**

(57) Um eine Beleuchtungsvorrichtung für das Zündschloß eines Kraftfahrzeugs zu schaffen, die am Zündschloß integriert ist und eine homogene blendfreie Lichtverteilung gewährleistet, ist erfindungsgemäß eine formschlüssig auf einem Gehäuse eines Zündschlosses aufliegende Beleuchtungshülse (1) aus lichtleitendem Material sowie eine auf der Beleuchtungshülse (1) lösbar befestigte und die Beleuchtungshülse (1) formschlüssig umfassende Beleuchtungshülsenabdeckung (12) vorgesehen, wobei ein eine Lampe (13) tragendes Lampengehäuse (14) in einen, Lichtumlenkprismen (8) nebst Lichteinleitungsschenkeln (6) der Beleuchtungshülse (1) lichtdicht umfassender Lichtabdeckungsaufsatz (18) der Beleuchtungshülsenabdeckung (12) einstückig integriert ist.

Fig. 1

Die Erfindung betrifft eine Beleuchtungsvorrichtung für das Zündschloß eines Kraftfahrzeuges nach dem Oberbegriff des Anspruches 1.

Im Stand der Technik sind Zündschloßbeleuchtungsvorrichtungen bekannt, bei welchen eine in der Nähe des Zündschlosses im Armaturenbrett des Kraftfahrzeugs installierte Lampe das Zündschloß anleuchtet. Eine am Zündschloß des Kraftfahrzeugs integrierte Beleuchtungsvorrichtung, welche lediglich das Zündschloß beleuchtet, ist in Stand der Technik unbekannt.

In der deutschen Patentschrift 25 35 080 ist eine Beleuchtungseinrichtung für im Armaturenbrett eines Kraftfahrzeugs zu installierende Zigarrenanzünder offenbart, die im wesentlichen eine Lampe, ein Lampengehäuse und einen zwischen dem Armaturenbrett und der Anzündersteckdose angeordneten Leuchtring aufweist, wobei der an seiner Rückseite mit Prismen versehene Leuchtring mit einem als Lichtleiter dienenden Ansatz aus lichtleitendem Material versehen ist, auf den ein das Lampengehäuse tragendes und den Ansatz lichtdicht umschließendes Haltestück aufgeklemmt ist. Auf den Lichtleitansatz sind zudem Lichtumlenkprismen aufgesetzt und derart ausgebildet, daß sie außer zur Lichtumlenkung auch gleichzeitig als Klemmstücke für das Lampengehäuse dienen. Hierbei flutet das von der Lampe kommende Licht durch die Schrägflächen der Lichtumlenkprismen in zwei aufgrund einer insbesondere schlitzförmigen Ausnehmung im Lichtleitansatz ausgebildete Lichtleiter ein und wird über an der Rückseite eines Flansches des Leuchtrings befindliche Streuprismen über den gesamten Flansch verteilt, so daß eine gleichmäßige Ausleuchtung der Anzündersteckdosenöffnung bewirkt wird.

Aufgrund der gegenüber einem elektrischen Zigarrenanzünder veränderten Geometrie eines Zündschlosses bedarf die Übertragung der im Stand der Technik bekannten Beleuchtungsvorrichtung für Zigarrenanzünder auf eine Zündschloßbeleuchtungsvorrichtung bestimmter Anpassungen, weil selbst im Falle leistungsstärkerer Lampen nicht unbedingt auch eine blendfreie homogene Ausleuchtung des erheblich großvolumigeren lichtleitenden Materials gewährleistet ist. Insbesondere weist das Zündschloß einen wesentlich größeren Durchmesser als eine Zigarrenanzündersteckdose auf. Hierdurch ergibt sich ein größerer Abstand der am Lichtleitansatz anzuordnenden Lampe von der Beleuchtungshülsenlängsachse. Ferner ist, da das Zündschloß armaturenrückfrontseitig montiert wird, ein Streuprismen tragender Flansch am Leuchtring nicht ausbildbar.

Ausgehend vom vorbekannten Stand der Technik ist es demnach Aufgabe der Erfindung, eine Beleuchtungseinrichtung für das Zündschloß eines Kraftfahrzeugs zu schaffen, die am Zündschloß integriert ist und die eine homogene blendfreie Lichtverteilung um das Zylinderschloß herum gewährleistet.

Diese Aufgabe wird durch die im Anspruch 1 näher gekennzeichneten Merkmale gelöst. Vorteilhafte Ausführungsformen der Erfindung sind in den Unteransprüchen gekennzeichnet.

Dadurch, daß eine formschlüssig auf dem Zündschloßgehäuse aufliegende Beleuchtungshülse aus lichtleitendem Material vorgesehen ist, kann das Licht mittels einer Lampe armaturenbrettrückfrontseitig in die Beleuchtungshülse eingeflutet werden und das Zündschloß mit Hilfe eines armaturenbrettvorderfrontseitig austretenden Leuchtrings der Beleuchtungshülse rundum homogen ausgeleuchtet werden, was mit bekannten, eine Lampe neben dem Zündschloß aufweisenden Beleuchtungsvorrichtungen nicht erreichbar ist. Die die Beleuchtungshülse formschlüssig umfassende, den Lichtaustritt verhindernde Beleuchtungshülsenabdeckung ermöglicht zusammen mit der ebenfalls formschlüssig auf das Zündschloßgehäuse aufklemmbaren Beleuchtungshülse darüberhinaus Fertigungs- und Montagevorteile.

Nach einer besonders bevorzugten Ausführungsform weist die Beleuchtungshülse einen Lichteinleitungsansatz, einen rohr- oder konusförmigen Lichtleitansatz sowie einen Leuchtkonus nebst Leuchtring auf. Hierbei ist der Lichteinleitungsansatz mit Lichtumlenkprismen versehen und weist Lichteinleitungsschenkel auf, die an den Lichtleitansatz anschließen. Um das über die Lichtumlenkprismen in die Lichteinleitungsschenkel peripher einflutende Licht mit ausreichendem Lichtstrom axial in den Lichtleitansatz umzulenken, weisen entweder die Lichteinleitungsschenkel oder die Lichteinleitungsschenkel und ein unterhalb angeformter Lichteinleitungshalbring eine als Reflexionsfläche dienende Schnittflächenabschrägung auf. Hierdurch kann das in die Wandung der Beleuchtungshülse zunächst peripher einflutende Licht axial umreflektiert werden. Das im noch großkalibrigen Lichtleitansatz bereits axial flutende Licht wird durch die Vorsehung eines Leuchtkonus nunmehr in den Bereich eines geringeren Durchmessers verdichtet, so daß das Licht den armaturenbrettvorderfrontseitig herausragenden Leuchtring mit ausreichender Beleuchtungsstärke sowie homogener Lichtverteilung verläßt.

Nach einer weiteren Ausführungsform kann die Beleuchtungshülsenabdeckung auch aus weißem Kunststoff hergestellt sein. Hierdurch wird das teilweise aus der Beleuchtungshülse herausflutende Licht wieder in die Wandung der Beleuchtungshülse zurückreflektiert. Auf diese Weise können Lichtverluste sehr gering gehalten werden.

Ausführungsformen der Erfindung sind anhand der Zeichnungen nachstehend näher beschrieben und erläutert.

Es zeigen:

Fig. 1     eine Seitenansicht auf die erfindungsgemäße Zündschloßbeleuchtungsvorrichtung,

Fig. 2     eine weitere um 90° gedrehte Seitenansicht der erfindungsgemäßen Zündschloßbeleuchtungsvorrichtung,

Fig. 3     eine Aufsicht auf die erfindungsgemäße Zündschloßbeleuchtungsvorrichtung.

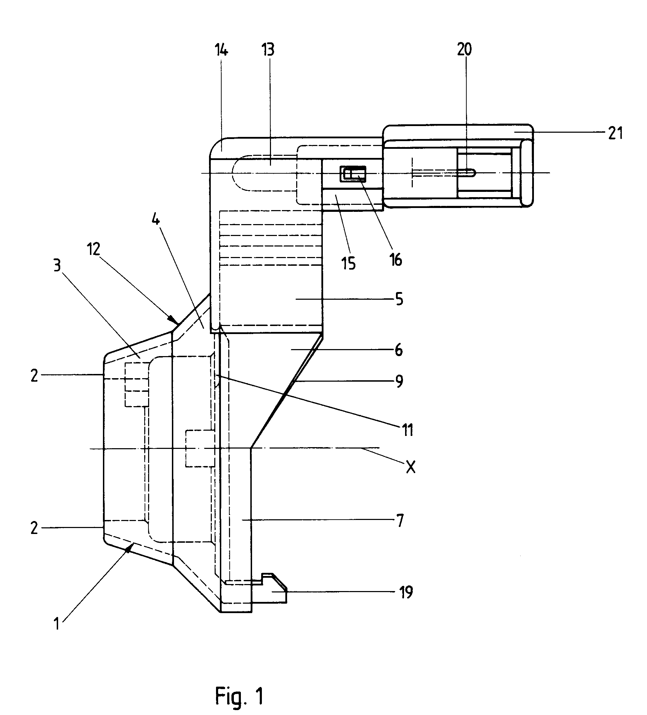

Fig. 1 zeigt eine Seitenansicht der erfindungsgemäßen Zündschloßbeleuchtungsvorrichtung mit einer formschlüssig auf dem Gehäuse eines Kraftfahrzeug-Zündschlosses (nicht abgebildet) aufliegenden Beleuchtungshülse 1 aus lichtleitendem Material sowie einer auf die Beleuchtungshülse 1 lösbar aufgeschobenen und die Beleuchtungshülse 1 formschlüssig umfassenden Beleuchtungshülsenabdeckung 12. In der Beleuchtungshülsenabdeckung 12 ist ein eine Lampe 13 tragendes Lampengehäuse 14 in einen, Lichtumlenkprismen 8 nebst Lichteinleitungsschenkeln 6 der Beleuchtungshülse 1 lichtdicht umfassenden Lichtabdeckungsaufsatz 18 materialeinheitlich integriert. Eine Lampenfassung 15 ist mittels einer Verrastung 16 am Lampengehäuse 14 festgelegt. Elektrische Anschlußkontakte 20 der Lampe 13 kontaktieren ein Anschlußsteckergehäuse 21, welches armaturenbretträckfrontseitig auf die Anschlußkontakte 20 der Lampe 13 aufgeschoben ist. Eine in der Beleuchtungshülse 1 vorgesehene Ausnehmung 11 dient zur Lichtflußunterbrechung, wodurch eine zu helle Ausleuchtung, z.B. ein Lichtpunkt im Bereich der Glühlampenposition vermieden wird.

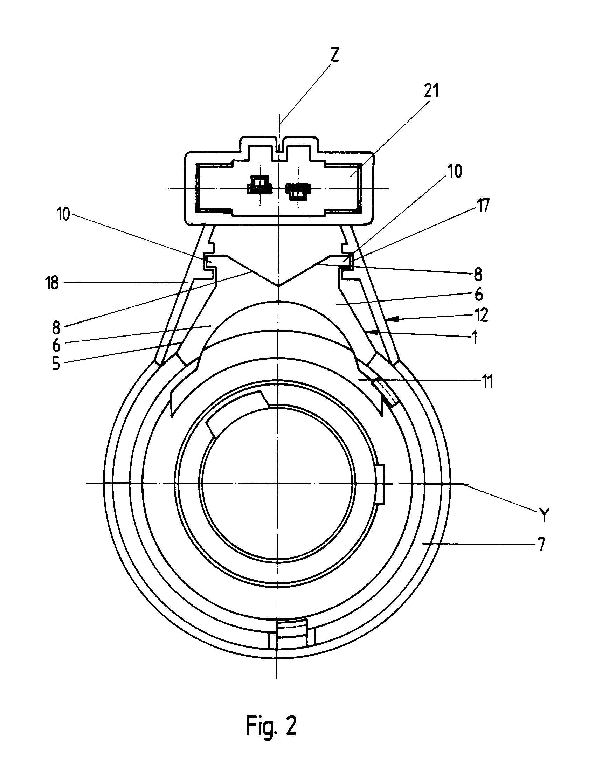

Wie insbesondere Fig. 2 zeigt, ist an der Beleuchtungshülse 1 ein Lichteinleitungsansatz 5 vorgesehen, der zwei mit Schrägflächen versehene Lichtumlenkprismen 8 aufweist, die das von der Lampe 13 emittierte Licht durch Lichtdurchtrittsschlitze des Lampengehäuses 14 empfangen. Die Lichtdurchtrittsschlitze befinden sich jeweils beidseitig eines im Lampengehäuse 14 in Richtung einer zweiten Beleuchtungshülsenquerachse Z angeordneten Lichtsperrsteges, welcher einer zu intensiven Lichteinleitung in Z-Richtung vorbeugen soll. Das von der Lampe 13 abgestrahlte Licht wird nach Durchtritt durch die Lichtdurchtrittsschlitze in den Lichtumlenkprismen 8 peripher in das Material der Lichteinleitungsschenkel 6 des Lichteinleitungsansatzes 5 umgeleitet. Die Lichtumlenkprismen 8 weisen angeformte Klemmschienen 10 auf, welche in Klemmnuten 17 der Beleuchtungshülsenabdeckung 12 einschiebbar sind. Die im wesentlichen M-förmigen Lichteinleitungsschenkel 6 weisen eine Schnittflächenabschrägung 9 auf, an welchen das peripher flutende Licht in Richtung einer Beleuchtungshülsenlängsachse X über einen rohrförmig oder konisch ausgebildeten Lichtleitansatz 4 und einen Leuchtkonus 3 zu einem armaturenbrettvorderfrontseitig austretenden Leuchtring 2 geleitet wird. Im vorliegenden Ausführungsbeispiel ist die Schnittflächenabschrägung 9 bis zur Beleuchtungshülsenlängsachse X ausgeführt. Ein Teil des über die Lichteinleitungsschenkel 6 peripher flutenden Lichtes tritt zudem in einen an die Lichteinleitungsschenkel 6 anschließenden Lichteinleitungshalbring 7 ein. Gemäß einem weiteren nicht abgebildeten Ausführungsbeispiel kann die Schnittflächenabschrägung 9 aber auch über die gesamte Peripherie des rohrförmigen Lichteinleitungsansatzes 5 ausgeführt sein. Die zuvor geschilderten Maßnahmen stehen zur Verfügung, um im Bedarfsfall wahlweise und abhängig von der durch das Zündschloßgehäuse vorgegebenen Geometrie eine optimal homogene Lichtverteilung am Leuchtring 2 zu erzielen. An der Beleuchtungshülse 1 ist gemäß der in Fig. 1 gezeigten Ausführungsform eine Rastvorrichtung 19 vorgesehen, mit deren Hilfe die Beleuchtungshülse 1 am Gehäuse des Zündschlosses befestigt werden kann. Gleichermaßen kann zwischen der Beleuchtungshülse 1 und der Beleuchtungshülsenabdeckung 12 eine weitere Verrastung vorgesehen sein.

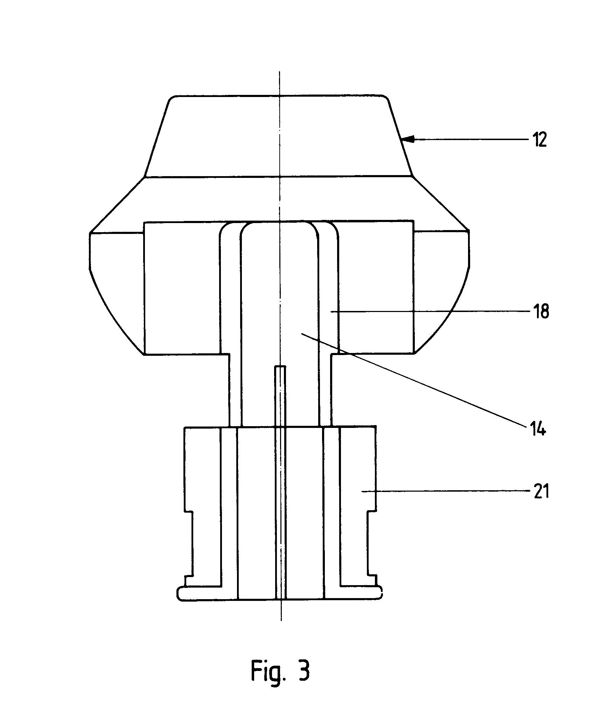

Fig. 3 zeigt eine Aufsicht auf die erfindungsgemäße Zündschloßbeleuchtungsvorrichtung mit dem Anschlußsteckergehäuse 21. Das Lampengehäuse 14 und ein Lichtabdeckungsaufsatz 18 sind jeweils in der materialeinheitlich ausgeformten Beleuchtungshülsenabdeckung 12 integriert.

**Patentansprüche**

1.     Beleuchtungsvorrichtung für das Zündschloß eines Kraftfahrzeugs, dadurch gekennzeichnet, daß eine formschlüssig auf einem Gehäuse eines Zündschlosses aufliegende Beleuchtungshülse (1) aus lichtleitendem Material sowie eine auf der Beleuchtungshülse (1) lösbar befestigte und die Beleuchtungshülse (1) formschlüssig umfassende Beleuchtungshülsenabdeckung (12) vorgesehen ist, wobei ein eine Lampe (13) tragendes Lampengehäuse (14) in einen, Lichtumlenkprismen (8) nebst Lichteinleitungsschenkeln (6) der Beleuchtungshülse (1) lichtdicht umfassenden Lichtabdeckungsaufsatz (18) der Beleuchtungshülsenabdeckung (12) materialeinheitlich integriert ist.

2.     Beleuchtungsvorrichtung nach Anspruch 1, dadurch gekennzeichnet, daß die Beleuchtungshülse (1) einen Lichteinleitungsansatz (5), einen rohr- oder konusförmigen Lichtleitansatz (4) sowie einen Leuchtkonus (3) nebst Leuchtring (2) aufweist, wobei im Bereich oberhalb einer durch eine Beleuchtungshülsenlängsachse (X) und eine erste Beleuchtungshülsenquerachse (Y) aufgespannten Medianebene, der mit Lichtumlenkprismen (8) versehene und Lichteinleitungsschenkel (6) aufweisende Lichteinleitungsansatz (5) in Richtung der Beleuchtungshülsenlängsachse (X) gesehen M-förmig und im Bereich unterhalb der Medianebene in Form eines in Richtung der Beleuchtungshülsenlängsachse (X) gesehen halbkreisförmigen Lichteinleitungshalbrings (7) ausgebildet ist, und wobei entweder die Lichteinleitungsschenkel (6) oder die Lichteinleitungsschenkel (6) und der Lichteinleitungshalbring (7) mit einer Schnittflächenabschrägung (9) versehen sind.

3. Beleuchtungsvorrichtung nach Anspruch 1 oder 2, dadurch gekennzeichnet, daß die Beleuchtungshülsenabdeckung (12) aus reflektierendem weißem Kunststoff gefertigt ist.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 459 160   (ARMAN SPA) <br> * Seite 2, Zeile 13 - Zeile 36 * * * Seite 3; Anspruch 1; Abbildungen 1,2 * * <br> – – – | 1,2 | B 60 Q 3/00 |
| Y,D | DE-B-2 535 080   (SCHOELLER & CO. ELEKTROTECHNISCHE FABRIK) <br> * Spalte 2, Zeile 37 - Zeile 59 * * * Abbildungen 1-6 * * <br> – – – | 1,2 | |
| A | DE-A-3 401 827   (POHLMANN H.) <br> * das ganze Dokument * * <br> – – – – – | 1,2 | |

**RECHERCHIERTE SACHGEBIETE (Int. Cl.5)**

B 60 Q
B 60 N
B 60 R
F 21 Q
F 23 Q

Der vorliegende Recherchenbericht wurde für alle Patentansprüche erstellt

| Recherchenort | Abschlußdatum der Recherche | Prüfer |
|---|---|---|
| Den Haag | 09 Dezember 91 | DE MAS A.G. |